Europäisches Patentamt

European Patent Office

Office européen des brevets

(11) Publication number: **0 098 535**
**B1**

## (12) EUROPEAN PATENT SPECIFICATION

(45) Date of publication of patent specification: **13.12.89**

(21) Application number: **83106391.2**

(22) Date of filing: **30.06.83**

(51) Int. Cl.⁴: **G 02 B 6/44**

(54) Optical fiber connector.

(30) Priority: **08.07.82 US 396522**

(43) Date of publication of application:
**18.01.84 Bulletin 84/03**

(45) Publication of the grant of the patent:
**13.12.89 Bulletin 89/50**

(84) Designated Contracting States:
**BE DE FR GB IT NL**

(73) Proprietor: **GTE Products Corporation
100 West 10th Street
Wilmington, DE 19801 (US)**

(72) Inventor: **Anderton, John J.
12 Chautaugua Court
Oil City Pennsylvania 16301 (US)**

(74) Representative: **Patentanwälte Grünecker,
Kinkeldey, Stockmair & Partner
Maximilianstrasse 58
D-8000 München 22 (DE)**

(56) References cited:
DE-A-2 518 319
GB-A-2 032 643
GB-A-2 054 893
JP-A-5 754 909
US-A-3 919 037

Courier Press, Leamington Spa, England.

## Description

This invention relates generally to optical fibers and more specifically to a housing of the type of an optical fiber splice for holding the ends of a pair of optical fibres in end-to-end relationship within a fiber connecting member, said housing comprising a pair of fasteners each adapted to secure a fiber stationary with respect to said housing, each fastener being positioned at an opposite end of said housing, a pair of slidable members for gripping and moving the fibers towards the receiving member along a straight axis, each member including an abutting member with an abutting surface adjacent said axis and a camming means adapted to urge the fiber against the abutting surface.

A fiber connector with features as stated above has been disclosed in DE—A—2 518 319.

There are many advantages to transmitting light energy via optical fiber wave guides and the use thereof is diverse. Single or multiple fiber wave guides may be used simply for transmitting light to a remote location. Complex communication systems may transmit multiple specific optical signals. These devices often require the coupling of fibers in end-to-end relationship. The coupling is a source of light loss with axial misalignment representing a particularly serious problem. Other factors causing signal loss are angular misalignment of fibers, longitudinal separation of fiber ends and reflection or refraction at the fiber ends.

When placing optical fibers in end-to-end relationship to minimize light loss, it is desirable to have a rugged splice that can be simply and reliably used in field installations. The junctioned fibers should be protected from environmental factors and be securely held in place.

The following patents relate to various fiber opticnconnectors: US 3 922 064 to Clark et al, US 3 990 779 to McCartney, US 4 050 783 to Tardy, US 4 050 781 to Beauhairi, US 4 097 129 to Wellington et al, US 4 146 299 to Wellington et al, DE—A—2 518 319 to Wolf et al, US 3 919 037 to Calvin, and JP 57-54 909 to Mitsuhiro.

It is desirable to form an optical fiber connector of simple construction that can be easily assembled and provides an accurate interconnection between optical fibers. The present invention is characterized in that the housing comprises a pair of partitions delimiting an axially aligned trough within the housing said trough being for holding said fiber receiving member in axial alignment with each of said partitions being adapted to engage opposite sides of said fiber receiving member for preventing movement in the axial direction, that a pair of channels is formed in the housing, each channel being intermediate a respective partition and one of said fasteners, and that each slidable member is slidable within a respective channel and includes a passageway aligned in use, with the straight axis for receipt thereof of an optical fiber, that the abutting member includes an, in use, vertically aligned abutting surface and that the camming means are mounted for rotation along an, in use, vertically aligned axis normal to and spaced from the straight axis, and that the camming means have an in use, vertical engagement surface whereby said camming means is rotatable from a first position adapted to be out of engagement with the fiber to a second position in engagement with the fibre.

It is also advantageous that the fiber receiving member comprises a body having an external polygonal shaped surface and formed by a pair of sections, each having a complementary mating planar surface, said planar surfaces being in engagement with one another, only one of said planar surfaces having an axially aligned groove therein and the planar surfaces together forming a passageway, that the body comprises an elastomeric material of sufficient resilience to permit said passageway to expandably receive optical fibers dimensioned larger than said passageway, and that a cylindrically shaped sleeve is mounted about the body for holding said sections in assembled relationship.

Figure 1 is an exploded assembly view illustrating the various components of the connector; and

Figure 2 is a side elevational view of the assembled connector shown partially in section.

## Detailed description

As illustrated in detail in the drawings, the fiber optic connector 11 comprises an elongated housing 13 fixedly holding a receiving member is for positioning fibers 17, 19 in end-to-end relationship with the fibers 17, 19 projecting outwardly from opposite sides along a straight axis. Each of the fibers 17, 19 is initially inserted into and held by one of the respective slidable members 21, 23. The slidable members 21, 23 are positioned in a channel 25 for movement toward the receiving member 15 for urging respective fibers 17, 19 into engagement with the receiving member 15 to permit transmission of an optical signal. At opposite ends of the housing 13, fasteners 27, 29 are provided for securing the fiber jacket to provide strain relief.

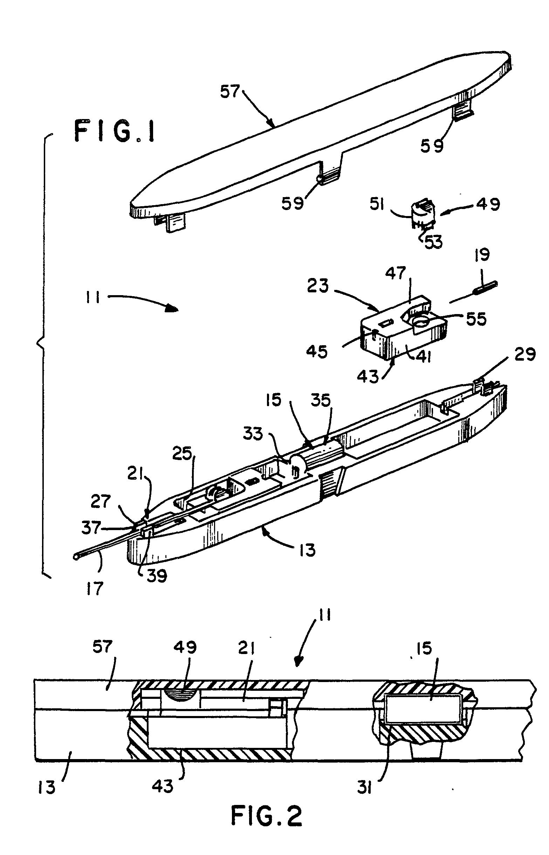

It is contemplated that the fiber receiving member 15 may be a ferrule or fiber optic splice shown as the receiving member 15. The splice may be the type as illustrated and described in U.S. patent 4,257,674 to Griffin et al. In this case, the splice includes a pair of section having mating planar surfaces in engagement. One of the surfaces includes an axially aligned groove facing the other surface to form an opening. The splice comprises an elastomeric material of sufficient resilience to permit the opening to expandably receive optical fibers dimensioned larger than the opening. A sleeve is mounted about the receiving member for holding the sections in assembled relationship. As illustrated in Figure 1, the housing 13 includes a centrally located trough 31 for positioning the axially aligned groove or the receiving member 15 on the straight axis. Partitions 33, 35 on either side of the trough 31 engage the sleeve of the receiving member 15 to prevent movement in an axial direction.

It could be also contemplated that one side of the housing 13 may move with a light signal receiving or emitting device. Hence, since the housing 13 on opposite sides of the receiving member 15 is substantially similar, the following description is given with respect to the housing 13 on only one side.

At the end of the housing 13 there is provided fastener 27 for engaging the outer jacket of optical fiber 17. A fastener 27 may be in the form of a pair of uprights 37, 39 which forcibly engage fiber 17 as a friction type fit. By firmly holding the outer jacket in place, external forces on the fiber 17 are absorbed by the housing.

Intermediate the fastener 27 and the trough 31 the housing 13 includes a channel 25 which is adapted to receive a slidable member 21. When positioned in the channel 25 as illustrated in Figure 1, the slidable member 21 transverses toward and away from the receiving member 15 along the direction of the straight axis. As illustrated in the exploded view portion of Figure 1, the slidable member 21 includes a base 41 having a flat bottom surface 43 which tracts along the corresponding flat surface of the channel 25.

The slidable member 21 includes a passageway 45 dimensioned larger than the fiber to permit the passage for fiber therethrough in alignment with the straight axis. The slidable member 21 is mounted so as to be trackable toward the receiving member 15 with the passageway 45 in alignment along the straight axis. The buffered fiber is inserted into the passageway 45 with an end projecting outwardly from the end of the slidable member 21 facing the receiving member 15.

The slidable member 21 is provided with an abutment 47 having a vertical surface spaced from the straight axis.

The camming means 49 is adapted to urge a fiber 19 against the abutment 47 and the vertical surface from a position permitting fiber movement to a position fixedly securing fiber 19 to slidable member 21. When the fiber 19 is in this latter position, the fiber 19 is adapted to be received by the receiving member 15 for transmission of optical signals by movement of the slidable member 21 toward the receiving member 15. More particularly, the camming means 49 is mounted for rotation along an axis normal to the straight axis and the camming surface 51 is spaced from the axis of rotation. As the camming means 49 is rotated from a first position with the surfaces out of engagement with the fiber 19 to a second position where the camming surface 51 is in engagement with the fiber 19, the fiber 19 is gripped. The camming means 49 includes depending flanges 53 having lateral projections which mate with a groove in a bore hole 55 in the slidable member 41.

The housing 13 is provided with a cover 57 to protect the splice from the environment. The cover 57 may be attached to the housing 13 by any convenient means such as the depending prongs 59 as shown in the drawing which engage the housing 13 as the cover 57 is properly positioned.

To assemble the connector, the receiving member 15 or ferule is positioned in the trough 31 so that movement in a direction along the straight axis is restrained. With the camming means 49 in an open position, the fiber core is threaded through the passageway 45 so that the fiber 17 projects outwardly from the end of the slidable member 21. The jacket is then removed from the end of the fiber 11 so as to expose a central core portion. The fiber 17 should project outwardly a sufficient distance so as to permit penetration of the fiber 17 into the receiving means 15 to the correct depth so as to provide good optical transmission. The camming means 49 which is formed as a rotatable clamp is actuated by turning so that camming surface 51 engages a fiber 17 and urges the fiber 17 against the abutment 47. Next, the slidable member 21 is placed into the channel 25 on one side of the housing 13. Slidable member 21 is moved toward the receiving member 15 to make connection so that good optical transmission can be assured. After disengaging the cam the jacketed portion of the fiber 17 is secured to the connector housing 13 so as to protect the fiber junction region from undue stress.

While preferred embodiments of this invention have been described and illustrated, it is to be recognized that modifications and variations may be made without departing from the spirit and scope of this invention as described in the appended claims.

Industrial applicability

The connector for the present invention is useful for connecting a pair of optical fibers in end-to-end relationship for the transmission of optical signals.

**Claims**

1. A housing (13) of the type for holding the ends of a pair of optical fibers in end-to-end relationship within a fiber receiving member (15), said housing comprising a pair of fasteners (27, 29) each adapted to secure a fiber (17) stationary with respect to said housing (13), each fastener being positioned at an opposite end of said housing (13), a pair of slidable members (21, 33) for gripping and moving the fibers (17, 19) towards the receiving member (15) along a straight axis, each member including an abutting member (47) with an abutting surface adjacent said axis and a camming means (49) adapted to urge the fiber (17, 19) against the abutting surface, characterized in that the housing (13) comprises a pair of partitions (33, 35) delimiting an axially aligned trough within the housing, said trough being for holding said fiber receiving member (15) in axial alignment with each of said partitions (33, 35) being adapted to engage opposite sides of said fiber receiving member (15) for preventing movement in the axial direction, that a pair of channels (25) is formed in the housing (13), each channel being intermediate a respective partition (33, 35) and one of said fasteners (27, 29), and that each slidable member (21, 23) is slidable within a respective channel (25) and includes a passageway (45) aligned, in use, with the straight axis for receipt thereof of an optical fiber (15), that the abutting member (47) includes an, in use, vertically aligned abutting surface and that the camming means (49) are mounted for rotation along an, in use, vertically aligned axis normal to and spaced from the straight axis and that the camming means have an, in use, vertical engagement surface whereby said camming means is rotatable from a first position adapted to be out of engagement with the fiber to a second position in engagement with the fiber.

2. A housing according to claim 1, characterized in that the fiber receiving member (15) comprises a body having an external polygonal shaped surface and formed by a pair of sections, each having a complementary mating planar surface, said planar surfaces being in engagement with one another, only one of said planar surfaces having an axially aligned groove therein and the planar surfaces together form a passageway, that the body comprises an elastomeric material of sufficient resilience to permit said passageway to expandably receive optical fibers dimensioned larger then said passageway and that a cylindrically shaped sleeve is mounted about the body for holding said sections in assembled relationship.

3. A housing according to claim 1, wherein a light receiving or emitting device is provided in a correspondingly adapted fiber receiving member, and an optical fiber is urged in engagement therewith.

**Patentansprüche**

1. Ein Gehäuse (13) zum Haltern der Enden eines Paars von optischen Fasern in einander gegenüberliegender Anordnung der Enden innerhalb eines Faserempfangsteils (15), wobei das Gehäuse ein Paar von Befestigungseinrichtungen (27, 29), von denen jede dazu vorgesehen ist, eine Faser stationär in bezug auf das Gehäuse (13) zu befestigen, wobei die Befestigungseinrichtungen jeweils an einander gegenüberliegenden Enden des Gehäuses (13) angeordnet sind, mit einem Paar von gleitfähigen Teilen (21, 23) zum Fassen und Bewegen der Fasern (17, 19) in Richtung auf das Faserempfangsteil (15) entlang einer geraden Achse, wobei jedes Teil ein Anlageglied (47) mit einer an die Achse angrenzenden Anlagefläche aufweist, und mit einer Nockeneinrichtung, die zum Anpressen der Faser (17, 19) gegen die Anlagefläche vorgesehen ist, dadurch gekennzeichnet, daß das Gehäuse (13) ein Paar von Trennwänden (33, 35) umfaßt, wobei die Trennwände einen axial ausgerichteten Durchgang innerhalb des Gehäuses begrenzen, wobei der Durchgang zur Halterung des Faserempfangsteils (15) in axialer Ausrichtung mit jeder der Trennwände (33, 35) vorgesehen ist, wobei die Trennwände mit den gegenüberliegenden Seiten des Faserempfangsteils (15) zur Anlage kommen, um eine Bewegung in axialer Richtung zu verhindern, daß ein Paar von Kanälen (25) in dem Gehäuse (13) ausgebildet ist, wobei jeder Kanal jeweils zwischen einer Trennwand (33, 35) und einer der Befestigungseinrichtungen (27, 29) angeordnet ist, und daß jedes gleitfähige Teil (21, 23) innerhalb des jeweiligen Kanals (25) gleiten kann und einen Durchgangsweg (45) aufweist, der im Betriebszustand mit der geraden Achse ausgerichtet ist, um eine optische Faser (50) aufzunehmen; daß das Anlageglied (47) im Betriebszustand eine vertikal ausgerichtete Anlagefläche umfaßt und daß die Nockeneinrichtung (49) zur Rotation um eine im Betriebszustand vertikal ausgerichtete Achse, die zur geraden Achse normal und beabstandet ist, vorgesehen ist, und die Nockeneinrichtungen im Betriebszustand, eine vertikale Angriffsfläche aufweisen, wobei die Nockeneinrichtung von einer ersten Position, in der sie zur Faser beabstandet ist, in eine zweite Position, in der sie gegen die Faser anliegt, verdrehbar ist.

2. Ein Gehäuse nach Anspruch 1, dadurch gekennzeichnet, daß das Faserempfangsteil (15) einen Körper umfaßt, der eine äußere, polygonal geformte Oberfläche aufweist und durch ein Paar von Teilen gebildet ist, wobei jedes Teil eine komplementäre ebene Oberfläche für eine gegenseitige Anlage aufweist, wobei, wenn die ebenen Oberflächen miteinander in Berührung sind, nur eine der ebenen Oberflächen eine axial ausgerichtete Rinne darin aufweist und die ebenen Oberflächen zusammen einen Durchgangsweg bilden; daß der Körper ein elastomeres Material von ausreichender Nachgiebigkeit aufweist, um zu gewährleisten, daß der Durchgangsweg optische Fasern, die stärker als der Durchgangsweg, sind, unter Ausdehnung aufnehmen kann; und daß eine zylindrisch geformte Hülle um den Körper vorgesehen ist, um die Teile im zusammengesetzten Zustand zu halten.

3. Ein Gehäuse nach Anspruch 1, wobei eine Lichtempfangs- oder Lichtemissionseinrichtung in einem entsprechend ausgelegten Faserempfangsteil vorgesehen ist, und mit einer darin eingedrungenen optischen Faser in Eingriff gebracht ist.

**Revendications**

1. Boitier (13) du type prévu pour maintenir les extrémités de deux fibres optiques bout-à-bout à l'intérieur d'un élément récepteur des fibres (15), le dit boitier comprenant deux agrafes (27, 29), chacune étant prévue pour maintenir immobile une fibre (17) par rapport au dit boitier (13), chaque agrafe étant disposée à une extrémité opposée du dit boitier (13), deux éléments coulissant (21, 23) pour saisir et déplacer les fibres (17, 19) vers l'élément récepteur (15) selon un axe rectiligne, chaque élément incluant une butée (47) ayant une surface de butée adjacente au dit axe et une came (49) prévue pour pousser la fibre (17, 19) contre la surface de butée, caractérisé en ce que le boitier (13) comporte deux cloisons (33, 35) délimitant une gouttière en alignement axial dans le boitier, la dite gouttière étant prévue pour maintenir le dit élément récepteur des fibres (15) en alignement axial, chacune des dites cloisons (33, 35) étant prévue pour être en contact avec les côtés opposés du dit élément récepteur des fibres (15) de manière à éviter tout mouvement en direction axiale, que deux canaux (25) sont pratiquées dans le boitier (13), chaque canal étant disposé entre une cloison associée (33, 35) et une des agrafes (27, 29), et que chaque élément coulissant (21, 23) peut coulisser à l'intérieur d'un canal associé (25) et inclut un passage (45) aligné, en fonctionnement, avec l'axe rectiligne, pour recevoir une fibre optique (15), que la butée (47) inclut une surface de butée alignée verticalement, en fonctionnement, et que la came (49) est disposée pour tourner autour d'un axe vertical, en fonctionnement, perpendiculaire à et à une certaine distance de l'axe rectiligne, et que la came présente une surface de contact verticale, en fonctionnement, de manière que la dite came puisse tourner d'une première position prévue pour être hors de contact avec la fibre en une deuxième position où elle est en contact avec la fibre.

2. Boitier selon la revendication 1 caractérisé en ce que l'élément récepteur des fibres (15) comprend un corps présentant une paroi extérieure de forme polygonale et formée par deux sections ayant chacune une paroi plane complémentaire, les dites parois planes étant en contact ensemble, seule une des parois planes présentant une rainure axiale, les parois plane formant ensemble un passage, que le corps comprend un matériau élastomère d'élasticité suffisante pour permettre au dit passage de recevoir, en dilatation, des fibres optiques plus larges que le dit passage, et qu'un manchon cylindrique est monté sur le corps pour maintenir les dites sections assemblées.

3. Boitier selon la revendication 1 caractérisé en ce qu'un dispositif émetteur ou récepteur de lumière est disposé dans un élément associé récepteur des fibres adapté de façon correspondante, et une fibre optique est poussée à son contact.

FIG.1

FIG.2

1